# EUROPÄISCHE PATENTSCHRIFT

(11) **EP 3 092 890 B1**
(45) Veröffentlichungstag und Bekanntmachung des Hinweises auf die Patenterteilung: **18.04.2018**
(21) Anmeldenummer: 16156728.4
(22) Anmeldetag: 22.02.2016
(51) Int. Cl.: A01D 90/04, A01F 15/10

(54) **SCHNEIDWERK FÜR EINE ERNTEMASCHINE**
CUTTING ASSEMBLY FOR A HARVESTER
BARRE DE COUPE DE MOISSONNEUSE

(30) Priorität: 06.05.2015 DE 202015003357 U
(43) Veröffentlichungstag der Anmeldung: 16.11.2016
(73) Patentinhaber: PÖTTINGER Landtechnik GmbH, 4710 Grieskirchen (AT)
(72) Erfinder: Aumayr, Klaus, 4612 Scharten (AT)
(74) Vertreter: Thoma, Michael

(56) Entgegenhaltungen:
- EP-A1- 2 653 025
- DE-A1-102011 013 640
- DE-A1-102013 007 304
- DE-B4-102005 054 429

## Beschreibung

Die vorliegende Erfindung betrifft ein Schneidwerk für eine Erntemaschine wie Ladewagen und/oder Ballenpresse, mit einer Mehrzahl von Messern, die an einem Messerträger gelagert und in Schneidstellung in einen Erntegutkanal hineinragend gehalten sind, wobei der Messerträger zwischen einer Aktivstellung und einer Inaktivstellung, in der die Messer außerhalb des Erntegutkanals angeordnet sind, beweglich gelagert ist, wobei zumindest eine Untergruppe der Messer an dem Messerbalken beweglich gelagert und wahlweise in eine Vorwahlstellung oder eine Nichtvorwahlstellung, in der die genannte Messeruntergruppe auch bei in Aktivstellung befindlichem Messerbalken außerhalb des Erntegutkanals verbleibt, verbringbar ist, wobei eine schaltbare Halteeinrichtung, die bewegliche Abstützelemente umfasst, zum Halten der genannten Messeruntergruppe in den genannten Vorwahl- und Nichtvorwahlstellungen am Messerbalken vorgesehen ist.

Landwirtschaftliche Ballenpressen oder Ladewagen besitzen regelmäßig ein der Aufnahmevorrichtung zugeordnetes Schneidwerk, um von der Aufnahmevorrichtung vom Boden aufgenommenes bzw. in die Ballenformkammer bzw. den Laderaum gefördertes Erntegut zu zerschneiden. Üblicherweise besitzen die Aufnahmevorrichtungen solcher landwirtschaftlicher Erntemaschinen einen Aufsammelrotor beispielsweise in Form einer Stachelwalze, um das Erntegut vom Boden aufzusammeln, oder allgemein ein geeignetes Förderorgan, das Erntegut vom Boden wegbewegt, beispielsweise in Form eines Förderbands, eines Saugers oder dergleichen, sowie einen dem genannten Aufnahmerotor bzw. Förderorgan nachgeordneten Förderrotor bzw. ein zweites Förderorgan, der/das der Stachelwalze bzw. dem ersten Förderorgan nachgeordnet ist und das übernommene Erntegut weiter in die Ballenformkammer bzw. den Laderaum fördert. Das vorgenannte Schneidwerk umfasst dabei regelmäßig eine Vielzahl von Messern, die in einen Förderkanal hineinragen, durch den der genannte Förderrotor bzw. das genannte zweite Förderorgan das Fördergut fördert, so dass das Erntegut in dem genannten Fördergut zerschnitten wird.

Der eingangs genannte Messerbalken, an dem die Messer gelagert sind, kann hierbei um eine oder mehrere Messerbalkenschwenkachsen verschwenkbar sein oder in anderer Weise verfahren oder bewegt werden, um die Messer aus dem Förderkanal herausfahren zu können, beispielsweise um die Messer schleifen oder austauschen zu können oder auch ohne Messer fahren zu können, wenn kein Zerschneiden des Ernteguts gewünscht ist. Solche Schneidwerke sind beispielsweise aus den Schriften DE 10 2013 007 304 A1, DE 10 2011 013 640 A1, EP 2 653 025 A1 oder DE 10 2005 054 429 B4 bekannt.

Je nach Erntegut und Verwendungszweck für das Erntegut wird dabei mit unterschiedlichem Messerabstand bzw. unterschiedlicher Messeranzahl gefahren, um das Erntegut je nach Wunsch des Landwirts unterschiedlich kurz oder lang abzuschneiden. Hierzu können beispielsweise einzelne Messer ausgebaut bzw. herausgenommen werden, wenn sich der genannte Messerbalken in seiner herausgefahrenen Nichtaktivstellung befindet, so dass beim Zurückfahren des Messerbalkens in die Aktivstellung nur die verbleibenden Messer in den Förderkanal einfahren.

Um hier nicht jedes Mal Messer ein- und ausbauen zu müssen, wurde bereits vorgeschlagen, zumindest eine Untergruppe von Messern an dem genannten Messerbalken beweglich zu lagern, so dass die Messer wahlweise in einer Vorwahlstellung und einer Nichtvorwahlstellung am Messerbalken positionierbar sind. In der Vorwahlstellung fahren die Messer beim Einschwenken des Messerbalkens in den Förderkanal ein, während die Messer in der genannten Nichtvorwahlstellung auch dann außerhalb des Förderkanals verbleiben, wenn der Messerbalken in seine Aktivstellung gefahren wird. Hierdurch können die Messer am Messerbalken verbleiben, auch wenn sie nicht schneiden sollen, und es ist kein Ausbau einzelner Messer notwendig, um mit einer verringerten Messeranzahl bzw. einem vergrößerten Messerabstand zu fahren, um das Erntegut in längere Stücke zu zerschneiden. Gleichzeitig verbleibt die Möglichkeit, durch Verbringen des Messerbalkens in dessen Inaktivstellung ganz ohne Messer zu fahren und alle Messer aus dem Förderkanal herauszufahren, so dass diese geschliffen oder auch nur überprüft und bei Bedarf ausgetauscht werden können.

Solche am Messerbalken beweglich gelagerte Messer können dabei mittels einer schaltbaren Halteeinrichtung am Messerbalken gehalten werden, wobei die Halteeinrichtung bewegliche Abstützelemente besitzen kann, die durch Schalten bzw. Verstellen der Halteeinrichtung zwischen einer Vorwahl- und Nichtvorwahlstellung hin- und herbewegt werden können, um die daran abgestützten Messer wahlweise in deren Vorwahlstellung oder deren Nichtvorwahlstellung zu halten. Beispielsweise können die genannten Abstützelemente an einer drehbar gelagerten Vorschaltwelle angebracht sein, so dass durch Verdrehen der Vorschaltwelle die Messer relativ zum Messerbalken verstellt und wahlweise in die Vorwahlstellung oder die Nichtvorwahlstellung verbracht werden können. In der genannten Vorwahlstellung fahren die Messer beim Einschwenken des Messerbalkens in den Förderkanal ein, während sie in der Nichtvorwahlstellung auch dann außerhalb des Förderkanals verbleiben, wenn der Messerbalken in seine Aktivstellung gefahren wird.

Solche verstellbaren Haltevorrichtungen zum Vorschalten einzelner Messeruntergruppen sind jedoch platztechnisch und hinsichtlich ihrer Kinematik nicht ganz einfach zu realisieren, wenn das Schneidwerk eine größere Messeranzahl umfassen soll und die Messer dabei in ihrer Schneidstellung beim Auftreffen von Hindernissen wie Steinen oder bei einer Überlastung des Erntegutkanals durch Schoppern und dergleichen selbsttätig ausweichen bzw. aus dem Erntegutkanal herausfahren können sollen. Hierzu können die Messer unter Zwischenschaltung eines Sicherheitsauslösemechanismus am Messerbalken abgestützt sein, der die Messer bei zu großen Kräften freigibt und ausweichen lässt und beispielsweise mit einer Federvorspannung arbeiten kann, um bei normalen Betriebskräften die Messer fest in ihrer Schneidstellung zu halten und lediglich bei übermäßigen Kräften nachzugeben. Solche Sicherheitsauslösemechanismen sind regelmäßig sperrig bzw. benötigen sie einen gewissen Bauraum. Zudem ist es nicht ganz einfach, solche Sicherheitsauslösemechanismen mit einer vorschaltbaren Halteeinrichtung zu kombinieren, um gleichzeitig ein Sicherheitsausweichen zu ermöglichen und eine einfache Verstellbarkeit der Schnittlänge zu erreichen.

Der Erfindung liegt die Aufgabe zugrunde, ein verbessertes Schneidwerk der eingangs genannten Art zu schaffen, das Nachteile des Standes der Technik vermeidet und Letzteren in vorteilhafter Weise weiterbildet. Insbesondere soll eine erhöhte Flexibilität bei der Einstellung der Schnittlänge des Ernteguts erzielt werden, ohne eine einfache Bedienung des Schneidwerks zu opfern oder die Option für die Verwendung eines Sicherheitsauslösemechanismus zu versperren.

Erfindungsgemäß wird die genannte Aufgabe durch ein Schneidwerk gemäß Anspruch 1 gelöst. Bevorzugte Ausgestaltungen der Erfindung sind Gegenstand der abhängigen Ansprüche.

Es wird also vorgeschlagen, für zumindest einen Teil der Messer verschiedene Abstütz- bzw. Anlenkmöglichkeiten am Messerbalken vorzusehen, um in einfacher Weise auswählen zu können, welche Messer fest am Messerbalken und welche Messer schaltbar am Messerbalken gelagert sein sollen. Erfindungsgemäß ist für zumindest einen Teil der Messer am Messerbalken zusätzlich zu den beweglichen Abstützelementen der schaltbaren Halteeinrichtung auch eine feste Abstützung zum festen Halten der Messer in der Vorwahlstellung an dem Messerbalken vorgesehen, so dass zumindest der genannte Teil der Messer wahlweise fest in der Vorwahlstellung oder beweglich zwischen der Vorwahlstellung und der Nichtvorwahlstellung am Messerbalken abstützbar ist. Durch die zusätzliche Option der festen Abstützung am Messerbalken kann die Variabilität der konfigurierbaren Messeranordnungen und -abstände und damit Schnittlängen nochmals deutlich erhöht werden, ohne ein zusätzliches Platzproblem zu schaffen, da einzelne Messer aus der Vorschaltbarkeit herausgenommen werden können und umgekehrt einzelne Messer in die Vorschaltbarkeit hineingenommen werden können, je nachdem, welche Messer zu- und wegschaltbar sein sollen.

Wird beispielsweise für 16 Messer sowohl die bewegliche Abstützung, die zwischen Vorwahlstellung und Nichtvorwahlstellung hin und her schaltbar ist, als auch die feste Abstützung vorgesehen, können beispielsweise vier Messer an der festen Abstützung angelenkt und die verbleibenden zwölf Messer an der beweglichen Abstützung angelenkt werden, so dass wahlweise durch Verfahren des Messerbalkens in die Inaktivstellung ganz ohne Messer gearbeitet und bei in seiner Aktivstellung befindlichen Messerbalken zusätzlich wahlweise mit vier oder 16 Messern gearbeitet werden kann, je nachdem, ob die zwölf an den beweglichen Abstützelementen angelenkten Messer in ihre Vorwahlstellung oder ihre Nichtvorwahlstellung gefahren sind. Wird indes eine alternative Schaltmöglichkeit benötigt, weil beispielsweise am Vormittag ein Feld mit acht Messern, am Nachmittag ein Feld mit 16 Messern und am Abend ein Feld ohne Messer bearbeitet werden soll, können anstelle der vorgenannten vier Messer dann acht Messer an den festen Abstützpunkten am Messerbalken angelenkt werden und anstelle der zuvor zwölf Messer dann nur noch acht Messer an den beweglichen Abstützelementen angelenkt werden, so dass bei in Inaktivstellung befindlichem Messerbalken ganz ohne Messer gefahren wird, und bei in seiner Aktivstellung befindlichem Messerbalken wahlweise mit acht oder 16 Messern gearbeitet werden kann, je nachdem, ob die Halteeinrichtung in ihre Vorwahlstellung oder in ihre Nichtvorwahlstellung bewegt ist. Durch die Herausnehmbarkeit einzelner Messer aus der Anlenkung an den beweglichen Abstützelementen der schaltbaren Halteinrichtung kann die Anzahl und/oder die Position der durch die schaltbare Halteeinrichtung schaltbaren Messer nahezu beliebig variiert werden, wobei die genannte Veränderung der Position der schaltbaren Messer beispielsweise meinen kann, dass in einer ersten Konfiguration - um bei dem vorgenannten Beispiel der 16 Messer mit verschiedenen Anlenkoptionen zu bleiben - bei acht fest angelenkten und acht schaltbar angelenkten Messern beispielsweise zwei Messer links außen, vier Messer in der Mitte und zwei Messer rechts außen schaltbar sein können, während in einer zweiten Konfiguration, in der ebenfalls mit acht fest angelenkten und acht schaltbaren Messern gefahren wird, vier Messer links außen und vier Messer rechts außen zuschaltbar und wegschaltbar sein können.

Um in einfacher Weise zwischen einer festen Abstützung und einer schaltbaren Abstützung wechseln zu können, können lösbare Anlenkmittel vorgesehen sein, mittels derer ein jeweiliges Messer lösbar an den genannten beweglichen Abstützelementen der schaltbaren Halteeinrichtung oder eben wahlweise an der festen Abstützung des Messerbalkens angelenkt werden kann. Solche lösbaren Anlenkmittel können beispielsweise lösbare Steckbolzenverbindung umfassen, so dass durch Umstecken des Steckbolzens das jeweilige Messer wahlweise am beweglichen Abstützelement der schaltbaren Halteeinrichtung oder an der festen Abstützung des Messerbalkens angelenkt werden kann. Alternativ oder zusätzlich können Schnappverbindungen oder labyrinthförmige Einsteckverbindungen, beispielsweise in Form bajonettartiger Formschlussverriegelungen, oder andere, geeignete Reibschluss- und/oder Formschlussverbindungen zum Anlenken der Messer an dem jeweiligen festen oder beweglichen Abstützelement am Messerbalken vorgesehen sein.

Die Messer können dabei jeweils grundsätzlich direkt an dem festen oder beweglichen Abstützelement angelenkt bzw. damit verbunden werden, beispielsweise durch In-Eingriff-Bringen eines geeigneten Abschnitts der Messerkontur mit dem beweglichen Abstützelement oder dem festen Abstützelement, was beispielsweise durch Umstecken eines vorgenannten Steckbolzens oder Umsetzen der vorgenannten lösbaren Verbindungsmittel erfolgen kann. Alternativ zu einer solchen direkten Messerabstützung an dem jeweiligen Abstützelement kann das jeweilige Messer jedoch auch indirekt daran abgestützt sein, insbesondere unter Zwischenschaltung eines Sicherheitsauslösemechanismus, der das Messer wahlweise entweder an der festen Abstützung am Messerbalken oder der beweglichen Abstützung der schaltbaren Halteeinrichtung abstützt und bei übermäßigem Betriebsdruck oder dem Auftreffen von Hindernissen das Messer nachgeben lässt.

Insbesondere können in Weiterbildung der Erfindung die Messer jeweils schwenkbar an dem Messerbalken gelagert sein und dabei mittels einer Abstützstrebe an dem Messerbalken abgestützt sein, wobei die genannte Abstützstrebe jeweils gelenkig einerseits an dem Messer und andererseits an dem festen oder beweglichen Abstützelement angelenkt wird. Der Anlenkpunkt der Abstützstrebe an dem Messer ist dabei von der Schwenkachse der schwenkbaren Lagerung des Messers am Messerbalken beabstandet, so dass die Abstützstrebe das Messer bezüglich der genannten Messerschwenkachse festsetzen kann.

Ist keine Sicherheitsauslösung notwendig oder gewünscht, kann die genannte Abstützstrebe als starre Strebe ausgebildet sein. Soll indes eine Sicherheitsauslösung bei übermäßigem Betriebsdruck oder auftreffenden Hindernissen ermöglicht werden, kann die genannte Abstützstrebe als längenveränderbares Federbein ausgebildet sein, beispielsweise in Form einer Teleskopstrebe, die mittels einer Feder in eine Stellung vorgespannt ist. In der vorgespannten Stellung hält die genannte Abstützstrebe das Messer in seiner vorbestimmten Stellung, die je nach Anlenkung der Abstützstrebe und Schaltstellung der schaltbaren Halteeinrichtung - wenn die Abstützstrebe an dessen beweglichem Abstützelement angelenkt ist - die Vorwahlstellung oder die Nichtvorwahlstellung sein kann. Wird das Messer in der Vorwahlstellung und der Messerbalken in seiner Aktivstellung gefahren, so dass das Messer bestimmungsgemäß in seiner Schneidstellung in den Erntegutkanal ragt, hält die federvorgespannte Abstützstrebe diese Schneidstellung, solange der Betriebsdruck nicht ein vorbestimmtes Maß überschreitet bzw. kein Hindernis auf das Messer trifft. Andererseits ändert das Federbein dann seine Länge, wenn der Betriebsdruck das vorgenannte Maß übersteigt bzw. ein Hindernis auf das Messer trifft, wodurch das Messer unter Verformung des Federbeins bzw. der Abstützstrebe zurückweichen und/oder zumindest teilweise aus dem Erntegutkanal herausfahren kann.

In vorteilhafter Weiterbildung der Erfindung ist die schaltbare Halteeinrichtung mit ihren bewegbaren Abstützelementen sowohl in der Inaktivstellung des Messerbalkens als auch in der Aktivstellung des Messerbalkens schaltbar ausgebildet, so dass die zu- und wegschaltbaren Messer, die an den bewegbaren Abstützelementen der genannten Halteeinrichtung abgestützt sind, zwischen ihrer Vorwahlstellung und Nichtvorwahlstellung hin- und hergeschalten werden können, ohne dass hierfür der Messerbalken in eine bestimmte Stellung verbracht werden müsste. Insbesondere können die an der genannten Halteeinrichtung angebundenen schaltbaren Messer auch dann zu- und weggeschaltet werden, wenn der Messerbalken in der Aktivstellung ist und an den festen Anlenkpunkten abgestützte Messer in den Erntegutkanal ragen. Hierdurch können kurzfristig weitere Messer zusätzlich zu den fest angelenkten Messern in den Erntegutkanal eingefahren oder auch ausgefahren werden, um die Anzahl der aktiv schneidenden Messer zu variieren, ohne dass hierfür der Messerbalken insgesamt in seine Inaktivstellung weggefahren werden müsste.

Die schaltbare Halteeinrichtung kann hierbei grundsätzlich verschieden ausgebildet sein. Gemäß einer vorteilhaften Ausführung der Erfindung kann die schaltbare Halteeinrichtung eine drehbar gelagerte Vorschaltwelle umfassen, mit der die beweglichen Abstützelemente, an denen die Messer angelenkt werden können, verbunden sind, so dass durch Verdrehen der Vorschaltwelle die genannten beweglichen Abstützelemente entweder in ihre Vorwahlstellung oder in ihre Nichtvorwahlstellung gefahren werden können. Die genannten Abstützelemente können hierbei direkt an der drehbaren Vorschaltwelle angebracht, beispielsweise fest daran befestigt sein. Alternativ können die genannten Abstützelemente auch unter Zwischenschaltung eines oder mehrerer Getriebeteile mittelbar mit der genannten Vorschaltwelle verbunden sein, wobei die genannten Abstützelemente beispielsweise als Kipphebel schwenkbar gelagert sein und nach dem Kurbelwellenprinzip oder dem Nockenwellenprinzip von der Vorschaltwelle verschwenkt werden können.

Die genannte Vorschaltwelle kann sich hierbei insbesondere liegend quer zur Förderrichtung durch den Erntegutkanal erstrecken, um die Messer quer zur Förderrichtung durch den Erntegutkanal in diesen einfahren und aus diesem ausfahren zu können.

Die genannte Vorschaltwelle kann hierbei grundsätzlich händisch betätigbar ausgebildet sein, beispielsweise mittels einer daran angebrachten Kurbel. Alternativ oder zusätzlich kann auch ein fremdenergiebetätigbarer Stellaktor zum Betätigen der Vorschaltwelle und/oder zum Betätigen der schaltbaren Halteeinrichtung vorgesehen sein, beispielsweise in Form eines Hydraulikaktors und/oder eines Elektroaktors wie beispielsweise einem Elektromotor.

Vorteilhafterweise ist die schaltbare Halteeinrichtung und die daran angebundenen Abstützelemente selbstschließend und/oder selbstverriegelnd ausgebildet derart, dass die beweglichen Abstützelemente sich zumindest in der Vorwahlstellung, in der die Messer bei in Aktivstellung befindlichem Messerbalken in Schneidstellung sind, von selbst verriegeln und/oder selbsthaltend abgestützt sind, ohne dass hierfür ein fremdenergiebetätigtes Halten der Vorschaltwelle oder eines anderen beweglichen Elements der Halteeinrichtung notwendig wäre. Insbesondere können die Halteeinrichtung und/oder deren bewegliche Abstützelemente von den Messern her und/oder den auf die Messer wirkenden Betriebskräften in der genannten Vorwahlstellung gehalten werden, so dass zumindest während eines signifikanten Teils des Schneidbetriebs keine Fremdenergie benötigt wird und/oder ein fremdenergiebetätigter Aktor zum Schalten der Halteeinrichtung ausgeschaltet sein kann.

In vorteilhafter Weiterbildung der Erfindung kann für die Halteeinrichtung und/oder deren bewegliche Abstützelemente ein Anschlag vorgesehen sein, gegen den in der Vorwahlstellung der Halteeinrichtung gefahren wird und der die beweglichen Abstützelemente in der Vorwahlstellung abstützt. Vorteilhafterweise kann hierbei vorgesehen sein, dass die Abstützelemente schwenkbar gelagert sind, um zwischen ihrer Vorwahlstellung und Nichtvorwahlstellung hin- und hergeschwenkt werden zu können, wobei die Anordnung des vorgenannten Anschlags derart getroffen ist, dass das Abstützelement auf seinem Weg in die Vorwahlstellung über einen Totpunkt hinwegfährt, in welchem Totpunkt die Wirkkräfte vom Messer her auf das Abstützelement durch dessen Schwenkachse gehen würden. Mit anderen Worten ist die Anordnung des schwenkbaren Abstützelements und des genannten Anschlags derart getroffen, dass in der Vorwahlstellung die vom Messer her kommenden Kräfte das Abstützelement gegen den Anschlag drücken bzw. in dessen Richtung zu drücken versuchen. Hierdurch ist die bewegliche Halteeinrichtung bzw. deren ggf. vorgesehene Vorschaltwelle selbstschließend bzw. selbstverriegelnd.

In Weiterbildung der Erfindung ist die genannte schaltbare Halteeinrichtung in Form einer separaten, eigenständig montierbaren Baugruppe ausgebildet, die an dem Messerbalken anmontiert werden kann. Hierdurch kann das Schneidwerk wahlweise in einer Ausführung ohne Vorschalteinrichtung und mit Vorschalteinrichtung verkauft werden, ohne dass hierfür separate Messerbalkenausführungen vorgesehen werden müssten. Insbesondere kann die genannte Baugruppe umfassend die drehbare Vorschaltwelle und die damit verbundenen beweglichen Abstützelemente als vormontierte Baugruppe lösbar an dem Messerbalken anmontierbar sein.

In Weiterbildung der Erfindung können die Messer des Schneidwerks in mehrere Untergruppen unterteilt sein, denen separate schaltbare Halteeinrichtungen zugeordnet sein können, so dass das Schneidwerk mehrere schaltbare Messergruppen umfassen kann. Beispielsweise können bei insgesamt 32 Messern am Schneidwerk 16 Messer einer ersten schaltbaren Halteeinrichtung und weitere 16 Messer einer zweiten schaltbaren Halteeinrichtung mit jeweils bewegbaren Abstützelementen zugeordnet sein, wobei zumindest eine dieser Untergruppen in der vorgenannten Weise zusätzlich zu den beweglichen Abstützelementen der schaltbaren Halteeinrichtung auch noch feste Anlenkelemente am Messerbalken umfasst bzw. daran abgestützt werden kann. Grundsätzlich kann für jede Untergruppe von Messern auch die zusätzliche Option der festen Anlenkpunkte am Messerbalken vorgesehen werden, wobei je nach benötigter Variabilität es auch ausreichen kann, wenn nur eine der genannten Untergruppen von Messern diese feste Abstützoption umfasst. Es versteht sich, dass die genannte Zahlenkonfiguration von insgesamt 32 Messern und zwei Untergruppen von jeweils 16 Messern beispielhaft gemeint ist und sowohl die Gesamtzahl der Messer als auch die Messerzahl der Untergruppen variieren kann. Grundsätzlich ist es dabei auch denkbar, dass eine Untergruppe nur ein Messer umfasst oder auch mit der Gesamtzahl der Messer des ganzen Schneidwerks übereinstimmt, also beim vorgenannten Beispiel beispielsweise 32 Messer einer schaltbaren Halteeinrichtung zugeordnet sind.

Die vorliegende Erfindung wird nachfolgend anhand eines bevorzugten Ausführungsbeispiels und zugehöriger Zeichnungen näher erläutert. In den Zeichnungen zeigen:

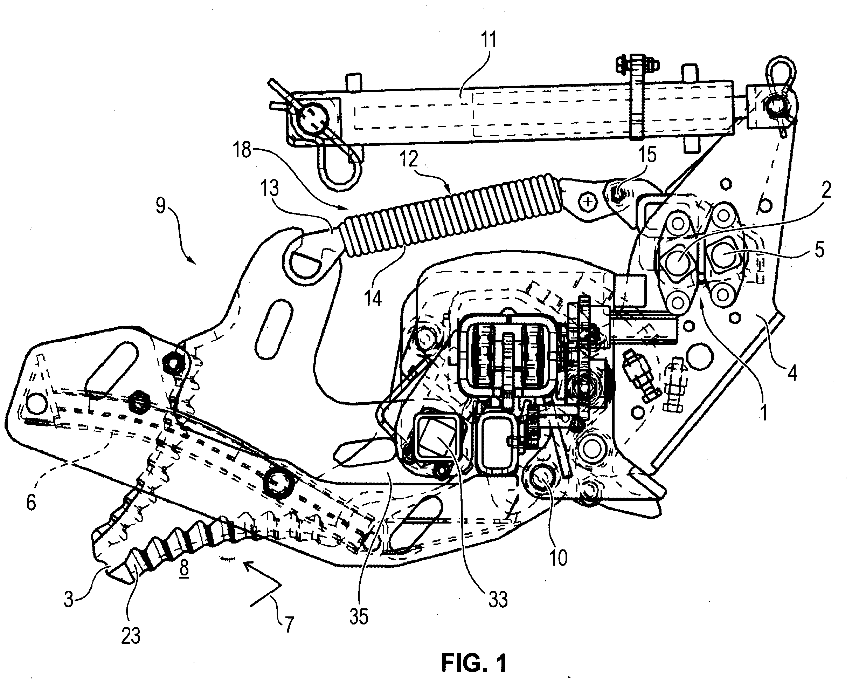

- Fig. 1:: eine schematische Seitenansicht eines Schneidwerks für eine Erntemaschine nach einer vorteilhaften Ausführung der Erfindung, wobei das dargestellte Messer an einem festen Abstützelement am Messerbalken angelenkt ist, wobei der Messerbalken in seiner Aktivstellung und das Messer in seiner Schneidstellung gezeigt sind,

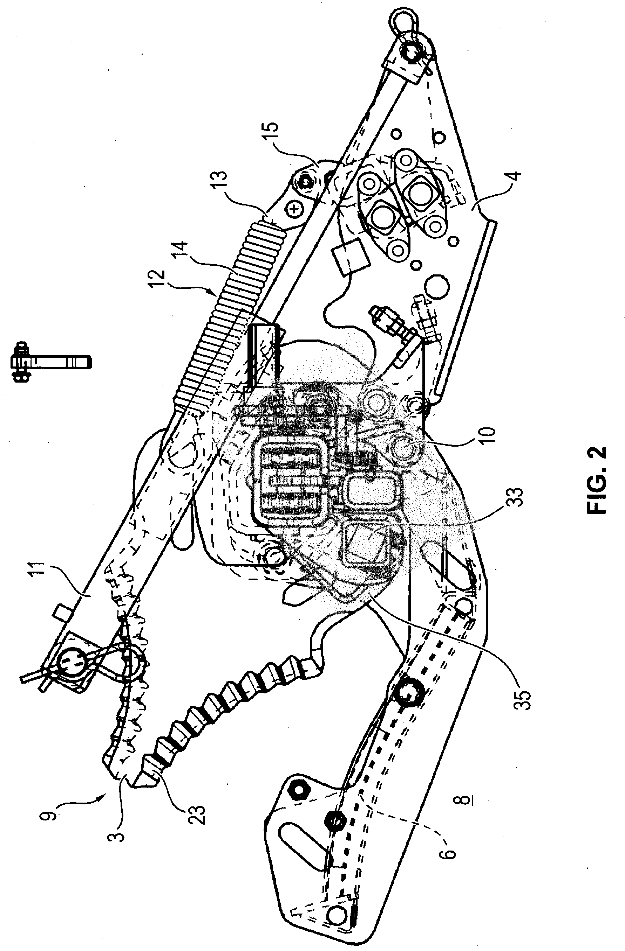

- Fig. 2:: das Schneidwerk aus Fig. 1 in einer ähnlichen Darstellung, wobei der Messerbalken sich in seiner Inaktivstellung befindet und das fest am Messerbalken angelenkte Messer sich außerhalb des Erntegutkanals befindet,

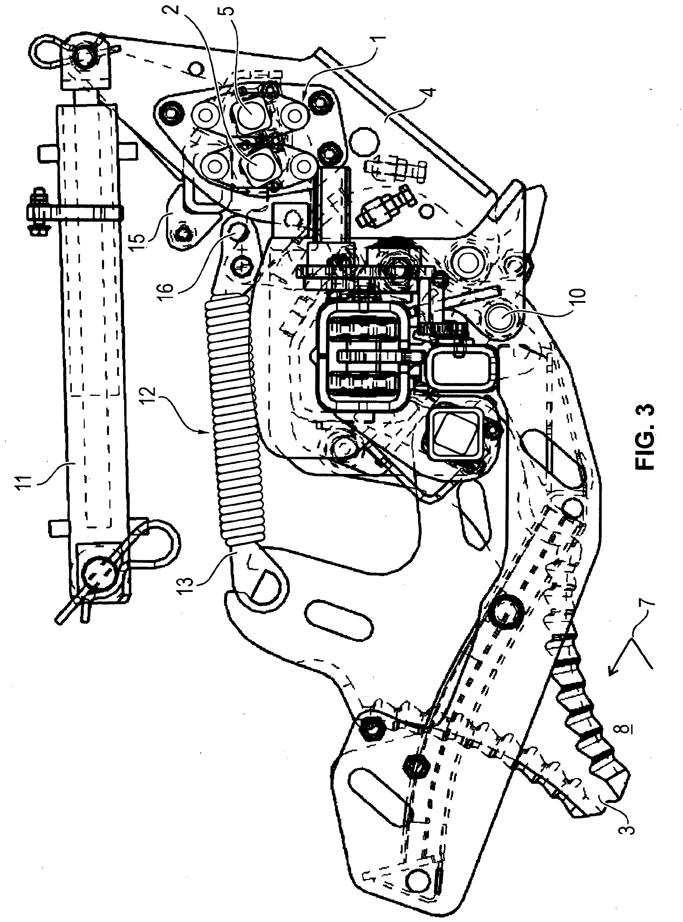

- Fig. 3:: eine Seitenansicht des Schneidwerks aus den vorhergehenden Figuren, wobei das Messer nicht mehr am festen Abstützelement angelenkt ist, sondern an dem beweglichen Abstützelement der schaltbaren Halteeinrichtung, wobei der Messerbalken in seiner Aktivstellung und die Halteeinrichtung in ihrer Vorwahlstellung gezeigt ist, so dass sich das Messer in seiner Schneidstellung befindet,

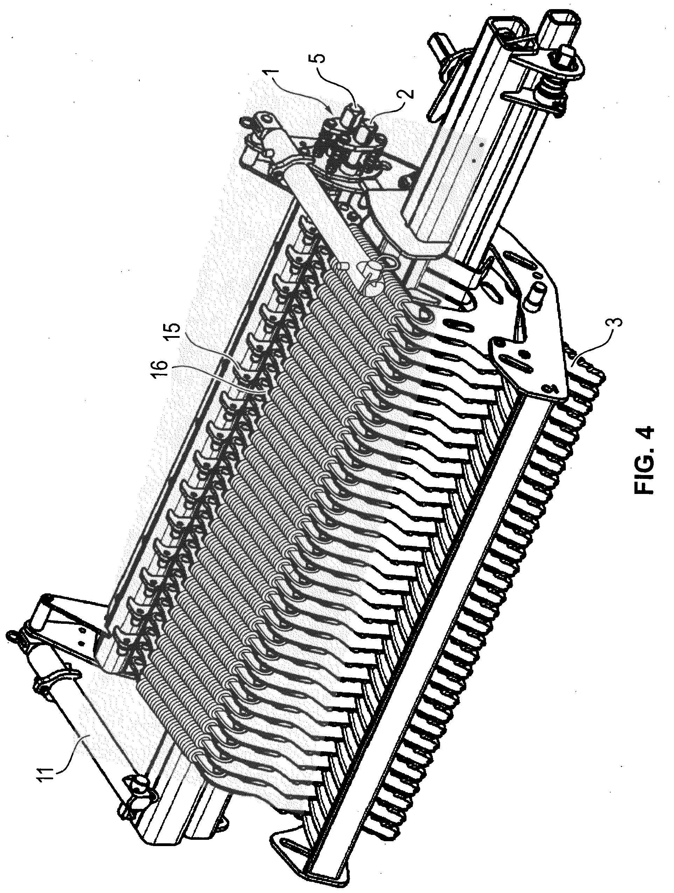

- Fig. 4:: eine perspektivische Darstellung des Schneidwerks gemäß der in Fig. 3 dargestellten Konfiguration, gemäß der die Messer nicht an den festen Abstützelementen, sondern an den beweglichen Abstützelementen der schaltbaren Halteeinrichtung dargestellt sind,

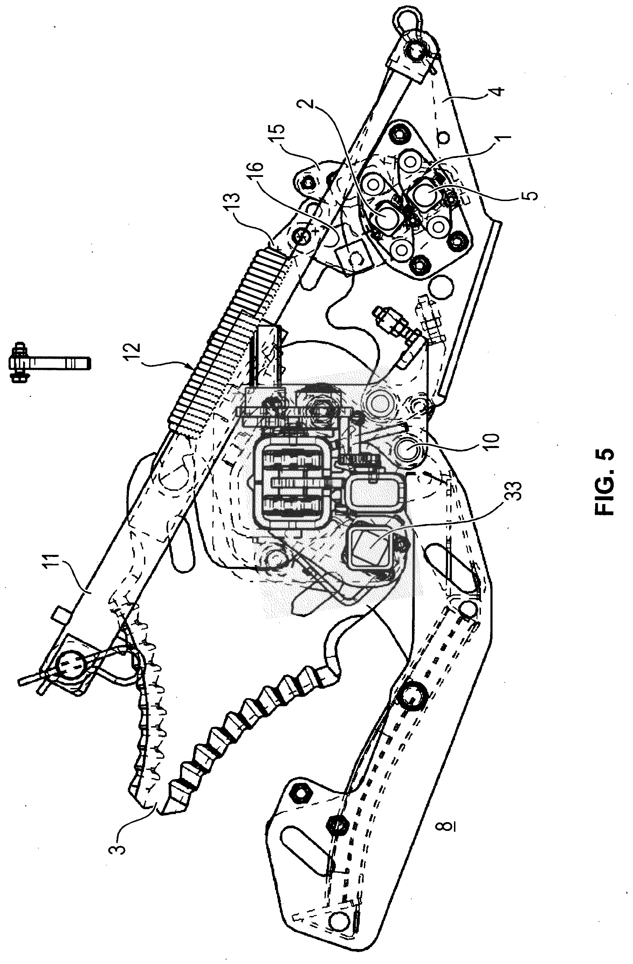

- Fig. 5:: eine Seitenansicht des Schneidwerks gemäß den Figuren 3 und 4, wobei das Messer weiterhin am beweglichen Abstützelement der schaltbaren Halteeinrichtung angelenkt ist, wobei der Messerbalken in seiner Inaktivstellung und die schaltbare Halteeinrichtung sowie das daran angelenkte Messer in ihren Vorwahlstellungen gezeigt sind,

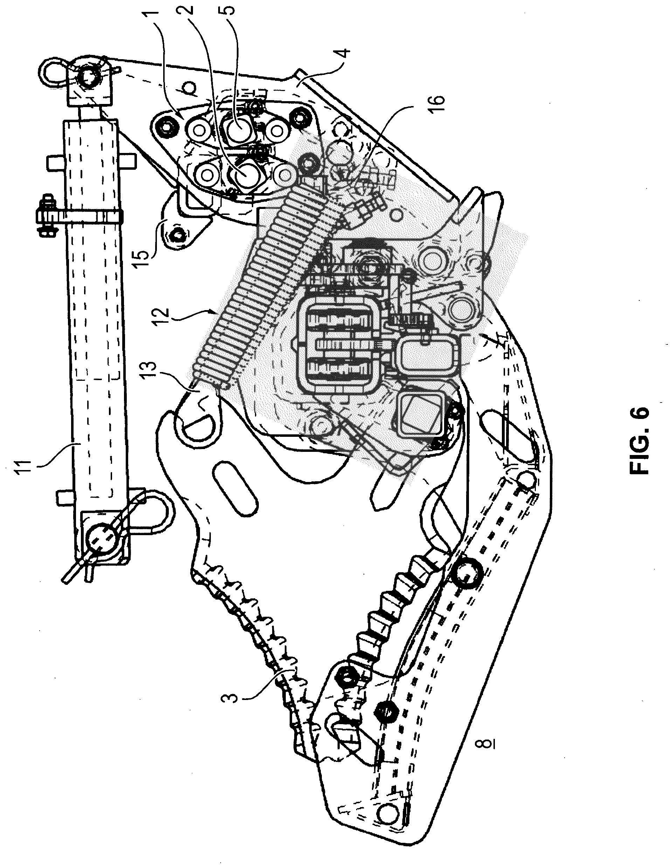

- Fig. 6:: eine Seitenansicht des Schneidwerks aus den vorhergehenden Figuren, wobei das gezeigte Messer weiterhin am beweglichen Abstützelement der schaltbaren Halteeinrichtung angelenkt ist, wobei der Messerbalken in seiner Aktivstellung und die Halteeinrichtung sowie das daran angelenkte Messer in den Nichtvorwahlstellungen gezeigt sind, in der das Messer trotz Aktivstellung des Messerbalkens außerhalb des Erntegutkanals angeordnet ist,

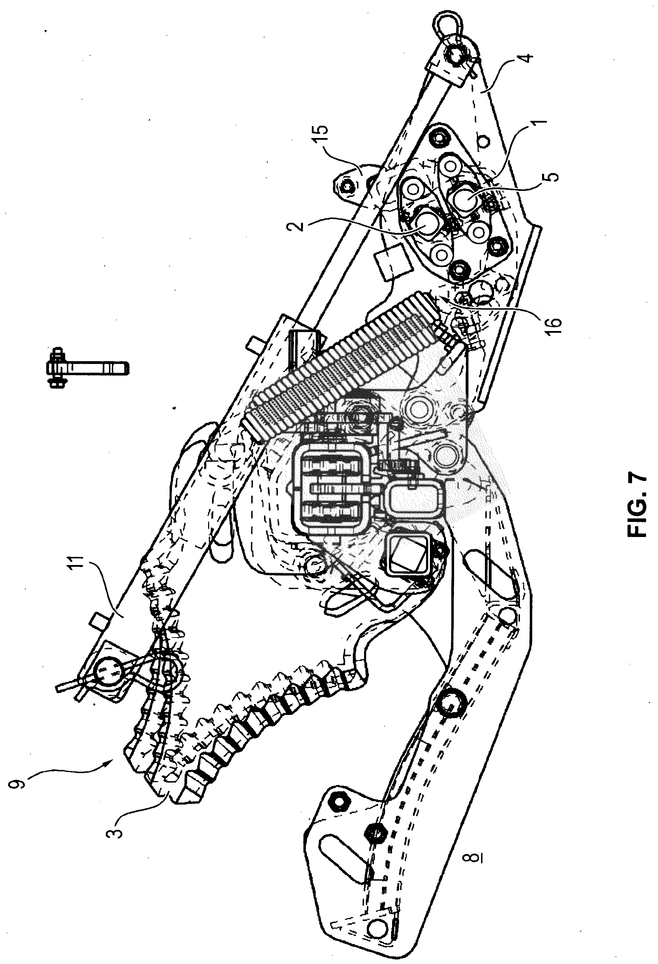

- Fig. 7:: eine Seitenansicht des Schneidwerks aus Fig. 6, wobei der Messerbalken in seiner Inaktivstellung und die schaltbare Halteeinrichtung und das daran angelenkte Messer in ihren Nichtvorwahlstellungen gezeigt sind,

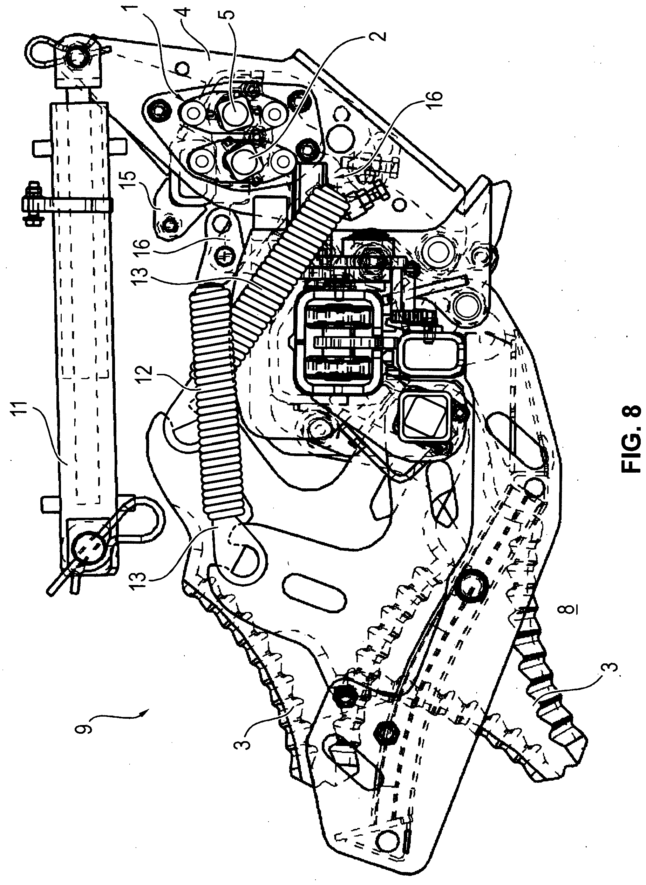

- Fig. 8:: eine Seitenansicht des Schneidwerks aus den vorhergehenden Figuren, wobei zwei Untergruppen von Messern an separat schaltbaren Halteeinrichtungen angelenkt sind, wobei eine erste Halteeinrichtung und die daran angelenkte erste Untergruppe von Messern in ihrer Vorwahlstellung und die andere Halteeinrichtung und die andere Untergruppe von Messern in ihrer Nichtvorwahlstellung gezeigt sind, wobei der Messerbalken sich in seiner Aktivstellung befindet, so dass die erste Untergruppe von Messern in der Schneidstellung ist und die zweite Untergruppe von Messern sich außerhalb des Erntegutkanals befindet,

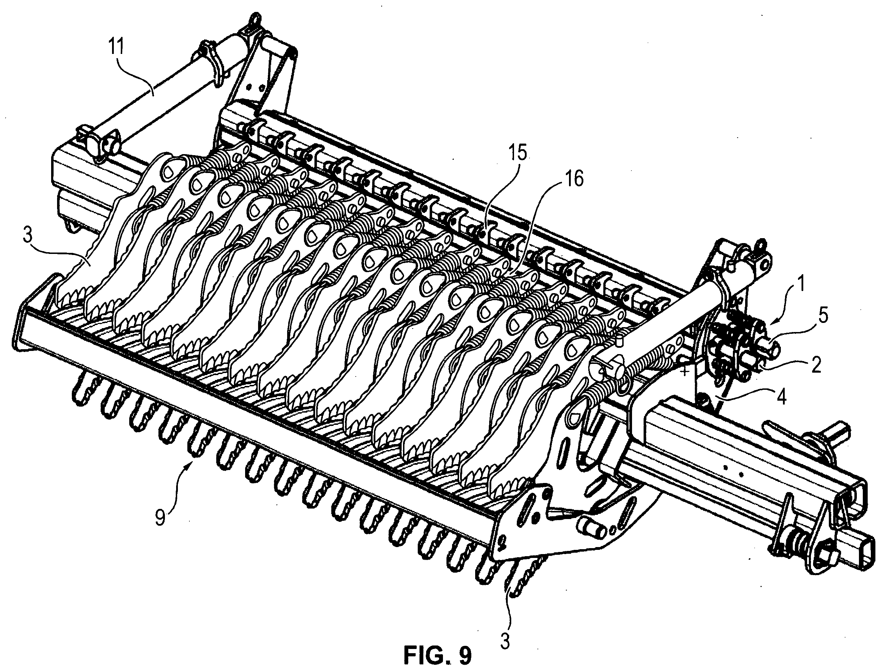

- Fig. 9:: eine perspektivische Darstellung des Schneidwerks in der in Fig. 8 gezeigten Konfiguration, in der der Messerbalken in der Aktivstellung ist, wobei die genannte erste Messeruntergruppe in der Schneidstellung und die genannte zweite Messeruntergruppe in einer Nichtschneidstellung außerhalb des Erntegutkanals ist,

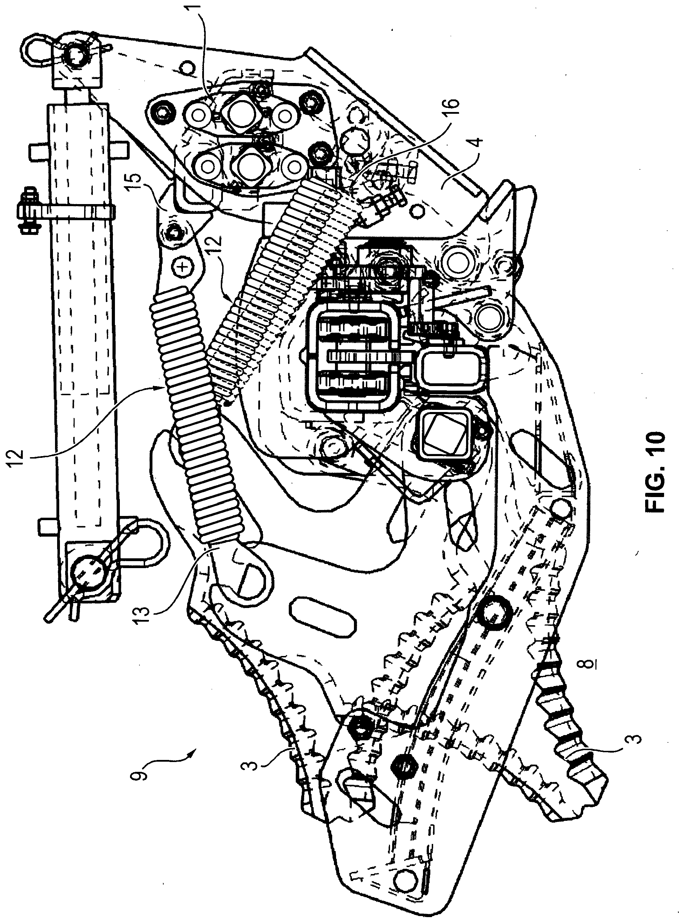

- Fig. 10:: eine Seitenansicht des Schneidwerks aus den vorhergehenden Figuren, wobei die beiden vorgenannten Halteeinrichtungen und die daran angelenkten Messer in ihren Nichtvorwahlstellungen gezeigt sind, in denen die Messer auch bei in seiner Aktivstellung befindlichem Messerbalken außerhalb des Erntegutkanals angeordnet sind, wobei einige Messer nicht an den schaltbaren Halteeinrichtungen, sondern an festen Abstützelementen am Messerbalken angelenkt sind, so dass sich diese Messer in ihrer Schneidstellung befinden, und

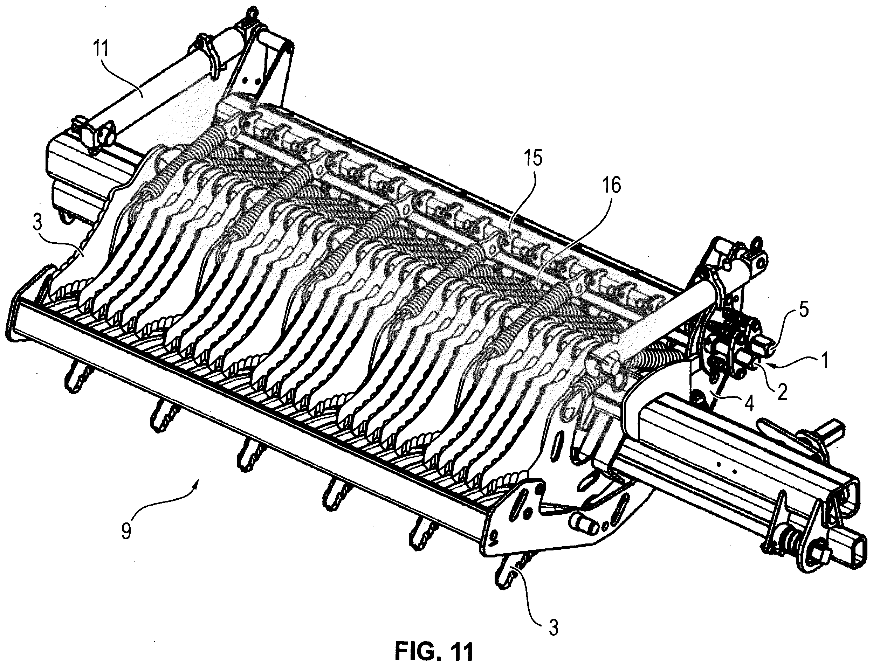

- Fig. 11:: eine perspektivische Darstellung des Schneidwerks in der in Fig. 10 gezeigten Konfiguration.

Das in den Figuren gezeigte Schneidwerk 9 kann Teil einer nicht näher gezeigten Erntemaschine insbesondere in Form eines Ladewagens oder einer Ballenpresse sein, wobei die genannte Erntemaschine mit einem Fahrwerk am Boden abgestützt und als Anbaugerät ausgebildet sein kann, das an einem nicht gezeigten Schlepper angebaut werden kann.

Um einer Aufnahmekammer, die den Laderaum des Ladewagens oder die Ballenformkammer der Ballenpresse bilden kann, Erntegut zuführen zu können, kann die genannte Erntemaschine eine dem Einlauf der Aufnahmekammer vorgeschaltete Aufnahme- und/oder Fördervorrichtung umfassen, die in an sich bekannter Weise eine über den Boden führbare, anhebbar und absenkbar ausgebildete Pickup besitzen kann, um auf dem Boden liegendes Erntegut aufsammeln zu können. Die genannte Pickup, die mit einer Stachelwalze arbeiten kann, kann das Erntegut an einen nachgeordneten Förderrotor übergeben, der das Erntegut weiter durch einen Erntegutkanal 8 in die genannte Aufnahmekammer fördern kann.

Der genannte Förderrotor 7 kann hierbei eine Vielzahl von Mitnehmerzinken umfassen, die von der Trommel des Förderrotors 7 nach außen vorspringen, wobei die genannten Mitnehmerzinken über die Breite des Förderrotors betrachtet in Drehrichtung versetzt zueinander angeordnet sein können, so dass die durch die Mitnehmerzinken definierte Struktur des Förderrotors 7 in sich verdreht ist. Andere Konfigurationen, beispielsweise nicht verdrehte Anordnungen, sind jedoch möglich. Es können auch andere Förderorgane beispielsweise in Form einer Schwinge mit Fingern, oder andere Förderelemente Verwendung finden, mittels derer das Fördergut durch den Erntegutkanal bzw. auch nur über die Messer des Schneidwerks 9 hinweg gefördert werden kann.

Dem genannten Förderrotor 7 ist ein Schneidwerk 9 zugeordnet, das sich im Wesentlichen über die gesamte Arbeitsbreite des Förderrotors 7 erstrecken kann. Das genannte Schneidwerk 9 kann obenliegend angeordnet sein und Messer 3 umfassen, die von der Oberseite des Erntegutkanals 8 in diesen hineinhängend angeordnet sein können. Das Schneidwerk 9 kann jedoch auch unten liegend angeordnet sein, so dass die Messer 3 von einer Unterseite des Erntegutkanals 8 her in den Erntegutkanal 8 hineinragen. Die genannten Messer 3, die über die Breite des Förderrotors 7 verteilt nebeneinanderliegend angeordnet sind, erstrecken sich hierbei durch eine Förderkanalwandung 6 hindurch, die die Decke oder den Boden des Erntegutkanals 8 über oder unter bzw. neben dem Förderrotor 7 bildet und für die Messer 3 Schlitze aufweist, durch die sich die Messer 3 hindurch erstrecken können.

Die Messer 3 sind hierbei an einem vorzugsweise balkenförmigen Messerträger 4 gelagert, der sich quer über den Förderrotor 7 hinweg erstreckt und selbstbeweglich gelagert ist, um das Schneidwerk 9 aus der in den Erntegutkanal 8 hineinragenden Arbeitsstellung herausschwenken zu können.

Wie die Fig. 1 und 2 zeigen, kann der Messerträger 4 an einem Rahmenabschnitt um eine liegende Querachse 10 schwenkbar aufgehängt bzw. angelenkt sein, so dass der Messerträger 4 bzw. das gesamte Schneidwerk 9 nach hinten/unten kippbar ist, und zwar in eine Wartungsstellung, in der die daran befestigten Messer 3 oberhalb des Erntegutkanals 8 in einer zugänglichen Position außerhalb des Erntegutkanals 8 sind. Zum Verschwenken des Messerträgers 4 kann eine durch Fremdenergie betätigbare Stellvorrichtung beispielsweise in Form eines Hydraulikzylinders 11 und/oder eine gewichtsentlastende Hilfsvorrichtung beispielsweise in Form einer Federeinrichtung vorgesehen sein, um eine leichte Handhabung des Schneidwerks 9 zu gewährleisten.

Die Messer 3 sind an dem Messerträger 4 beweglich gelagert, so dass sie zwischen einer aktiven Schneidstellung, in der sie in den Erntegutkanal 8 bis zu den bzw. zwischen die Mitnehmerzinken des Förderrotors 7 hineinragen, und einer Ausweichstellung bzw. inaktiven Nicht-Schneidstellung, in der sie nicht oder nur unwesentlich in den genannten Erntegutkanal 8 hineinragen, hin und her verbringbar sind, vgl. im Vergleich zueinander die Fig. 3 und Fig. 6.

Wie insbesondere die Fig. 3-6 zeigen, sind die Messer 3 um eine liegende Schwenkachse 33, die sich im Wesentlichen quer zu der Förderrichtung durch den Förderkanal 8 erstreckt, schwenkbar derart, dass die Messer 3 mit ihrer Schneide 23 in Förderrichtung nachgeben und aus dem Förderkanal hinausschwenken können. Die genannte Schwenkachse 33 ist hierbei außerhalb des genannten Förderkanals 8 in einem Kopfabschnitt 35 des Messers 3 näherungsweise in einer Verlängerung der Schneide 23 angeordnet.

Der genannte Kopfabschnitt 35 des Messers 3 ist dabei der bezüglich der Förderrichtung durch den Erntegutkanal 8 weiter vorne liegende, d.h. stromauf liegende Abschnitt des Messers 3, von dem aus sich die Schneide 23 des Messers 3 immer tiefer, d.h. weiter vorspringend in den Erntegutkanal 8 hinein säbelförmig erstreckt, vgl. Fig. 1. Das Messer 3 kann dabei als Wendemesser ausgebildet sein, das zwei Schneiden umfasst, so dass es bei Bruch oder Beschädigung der einen Schneide gewendet und mit der frischen Schneide wieder verwendet werden kann. Die noch näher zu beschreibenden Rückhaltemittel 12, die den Auslösevorgang verhindern bzw. bremsen und rückstellen, greifen an einem dem genannten Kopfabschnitt 35 des Messers 3 gegenüberliegenden Messerrücken an, der in Förderrichtung durch den Erntegutkanal 8 betrachtet einen hinteren Randabschnitt des Messers 3 bildet.

Wie die Figuren zeigen, können die genannten Rückhaltemittel 12 als Anlenkstrebe ausgebildet sein, die jeweils gelenkig an dem jeweiligen Messer 3 einerseits und einem Anlenkelement am Messerträger 10 andererseits gelenkig angelenkt ist und ein Verdrehen des Messers 3 um die vorgenannte Messerdrehachse am Messerträger 10 verhindert.

Die genannte Anlenkstrebe 13 kann hierbei längenveränderbar ausgebildet sein, um durch Längenveränderung ein Ausweichen des Messers 3 bei Auftreffen eines Hindernisses oder übermäßigem Erntegutdruck zu erlauben. Insbesondere kann die Anlenkstrebe 13 als teleskopierbares Federbein ausgebildet sein, das durch eine Federeinrichtung 14 in eine vorbestimmte Ausgangsstellung bzw. Ausgangslänge vorgespannt ist und das Messer 3 bei normalem Erntegutdruck in der gewünschten Schneidstellung hält, wie dies Fig. 1 zeigt. Trifft ein Hindernis auf die Schneide des Messers 3, kann unter Längenänderung der Anlenkstrebe 13 - bei der in den Figuren gezeigten Ausführung durch Zusammendrücken bzw.

Verkürzen des Federbeins - das Messer 3 zumindest teilweise aus dem Erntegutkanal 8 ausschwenken.

Wie die Figuren 1 und 2 zeigen, können die Messer 3 über die Anlenkstrebe 13 an einem festen Abstützelement 15 angelenkt bzw. abgestützt sein, das positionsfest am Messerträger 10 vorgesehen bzw. angebracht sein kann. Dementsprechend können die an festen Abstützelementen 15 angelenkten Messer 3 durch Ein- und Ausschwenken des Messerträgers 10 aus dem Erntegutkanal 8 ein- und ausgefahren werden, wie dies ein Vergleich der Figuren 1 und 2 zeigt. In Fig. 1 ist der Messerträger 10 in seiner Aktivstellung gezeigt, so dass die an den festen Abstützelementen 15 abgestützten Messer 3 in ihrer Schneidstellung im Erntegutkanal 8 sind. Wird der Messerträger 10 in seine Inaktivstellung gemäß Fig. 2 ausgeschwenkt, werden durch die Anlenkung an den festen Abstützelementen 15 auch die Messer 3 aus dem Erntegutkanal 8 ausgeschwenkt. Wie die Figuren 3-11 zeigen, kann zumindest eine Untergruppe der Messer 3 aber auch anstelle an den genannten festen Abstützelementen 15 an beweglichen Abstützelementen 16 einer schaltbaren Halteeinrichtung 1 angelenkt sein, die insgesamt an dem vorgenannten ausschwenkbaren Messerträger 10 gelagert sein kann. Die genannte schaltbare Halteeinrichtung 1 kann hierbei eine sich quer zur Förderrichtung durch den Erntegutkanal 8 liegend erstreckende Vorschaltwelle 2 umfassen, an der die genannten beweglichen Abstützelemente 16 befestigt sein können, wobei die beweglichen Abstützelemente 16 direkt oder mittelbar an der genannten Vorschaltwelle 2 befestigt sein können, so dass ein Verdrehen der Vorschaltwelle 2 ein Verschwenken der daran angelenkten beweglichen Abstützelemente 16 bewirkt.

Wie die Figuren zeigen, können hierbei mehrere Untergruppen von Messern 3 gebildet sein, denen mehrere separat schaltbare Halteeinrichtungen 1 zugeordnet werden können. Beispielsweise können zwei solche schaltbare Halteeinrichtungen 1 mit zwei separat verdrehbaren Vorschaltwellen 2 und 5 vorgesehen sein, die sich in der genannten Weise parallel zueinander liegend quer zur Fahrtrichtung der Erntemaschine erstrecken können. Jede der genannten Vorschaltwellen 2 und 5 können dabei durch einen geeigneten Stellaktor beispielsweise in Form eines Hydromotors oder eines Elektromotors oder auch durch mechanische Ankopplung an einen Antriebsstrang verstellt werden, um die daran angelenkten beweglichen Abstützelemente 16 zwischen deren Vorwahlstellung und Nichtvorwahlstellung verfahren zu können.

Beispielsweise können die beiden Vorschaltwellen 2 und 5 in Wellenlängsrichtung jeweils abwechselnd ein solches bewegliches Abstützelement 16 umfassen, um jedes zweite Messer 3 beweglich abstützen zu können. Es sind jedoch auch andere Aufteilungen der Messer 3 auf verschiedene Vorschaltwellen möglich. Beispielsweise kann einer Vorschaltwelle jedes dritte Messer zugeordnet sein, so dass die entsprechende Vorschaltwelle an jeder dritten Messerposition ein entsprechendes bewegliches Abstützelement 16 besitzt, während die andere Vorschaltwelle solche Abstützelemente 16 für jedes erste, zweite, vierte, fünfte, siebte und achte etc. Messer besitzen kann. Bei Vorhandensein von mehr als zwei Vorschaltwellen können nochmals andere Aufteilungen vorgenommen werden.

Wie Fig. 3 zeigt, können die Messer 3 über die vorgenannten Anlenkstreben 13 an den genannten beweglichen Abstützelementen 16 gelenkig angelenkt werden. Befinden sich die Vorschaltwellen 2 und 5 in ihren Vorwahlstellungen, die in Fig. 3 gezeigt sind, befinden sich die Messer 3 bei in seiner Aktivstellung befindlichem Messerträger 10 in einer Schneidstellung im Erntegutkanal 8, wie sie sich auch bei fester Anlenkung gemäß Fig. 1 befinden.

Werden indes die Vorschaltwellen 2 und 5 in ihre Nichtvorwahlstellung verdreht, wie dies Fig. 6 zeigt, werden die Messer 3 aus dem Erntegutkanal 8 ausgeschwenkt, so dass sie sich auch dann in einer Nichtschneidstellung außerhalb des Erntegutkanals 8 befinden, wenn der Messerträger 10 in seiner Aktivstellung ist.

Wird der genannte Messerträger 10 in seine Inaktivstellung verbracht, sind die an den beweglichen Abstützelementen 16 angelenkten Messer 3 in jedem Fall außerhalb des Erntegutkanals 8, und zwar ungeachtet der Vorwahlstellung oder Nichtvorwahlstellung der genannten Vorschaltwellen 2 und 5. In Fig. 5 ist die Vorwahlstellung der beweglichen Abstützelemente 16 gezeigt, während Fig. 7 die Nichtvorwahlstellung der beweglichen Abstützelemente 16 zeigt.

Bei Verwendung von mehreren separat schaltbaren Halteeinrichtungen können die diesen Halteeinrichtungen zugeordneten Messer 3 auch in verschiedenen Gruppen in verschiedene Schaltstellungen gebracht werden. Wie Fig. 8 zeigt, kann beispielsweise eine Messergruppe in der Vorwahlstellung und eine andere Messergruppe in der Nichtvorwahlstellung gefahren werden, so dass bei in seiner Aktivstellung befindlichem Messerträger 10 die in Vorwahlstellung befindliche Messergruppe in Schneidstellung in den Erntegutkanal 8 ragt, während die in Nichtvorwahlstellung befindliche Messergruppe außerhalb des Erntegutkanals 8 angeordnet ist, vgl. hierzu auch Fig. 9.

Eine weitere Variationsmöglichkeit ergibt sich durch einen Wechsel der Anlenkung eines oder mehrerer Messer 3. Wie Fig. 9 bis Fig. 11 zeigen, können einige Messer 3 aus der Vorschaltbarkeit herausgenommen und fest am Messerträger 10 angelenkt werden, indem die jeweiligen Anlenkstreben 13 nicht mehr an einem der beweglichen Abstützelemente 16, sondern an einem jeweiligen festen Abstützelement 15 angelenkt werden. Dementsprechend befinden sich die fest angelenkten Messer 3 bei in seiner Aktivstellung befindlichem Messerbalken 10 in der Schneidstellung, während die übrigen in der Vorschaltbarkeit verbleibenden Messer beispielsweise in die Nichtvorwahlstellung verbracht werden können, um nur mit den fest angelenkten Messern zu schneiden. Durch Zuschaltung einer oder beider weiterer Messergruppen über die Vorschaltwellen 2 und 5 kann dann mit entsprechend mehr Messern geschnitten werden.

Die schaltbare Halteeinrichtung 1 bzw. deren Vorschaltwellen 2 und 5 sind dabei vorteilhafterweise selbstschließend und/oder selbstverriegelnd ausgebildet, so dass sie ohne Fremdkraft von außen von selbst in der Vorwahlstellung verbleiben. Wie beispielsweise aus Fig. 3 ersichtlich ist, kann den beweglichen Abstützelementen 16 jeweils ein Anschlag zugeordnet sein, der die beweglichen Abstützelemente 16 in der Vorwahlstellung hält bzw. gegen die Federkraft der Federeinrichtung 14 vom Messer 3 her abstützt. Hierzu kann das bewegliche Abstützelement 16 auf seinem Weg von der Nichtvorwahlstellung in die Vorwahlstellung einen Totpunkt überfahren, so dass sozusagen eine Überstreckung eintritt. Die Wirklinie der Abstützstrebe 13 bzw. der Federeinrichtung 14 geht an dem Drehpunkt des beweglichen Abstützelements 16 vorbei, so dass das bewegliche Abstützelement 16 gegen den Anschlag gezwungen wird. Hierdurch kann in der Vorwahlstellung der Stellaktor zum Verdrehen der jeweiligen Vorschaltwelle 2 oder 5 abgeschaltet werden bzw. wird der Stellaktor lediglich zum Umschalten von Vorwahlstellung auf Nichtvorwahlstellung bzw. von Nichtvorwahlstellung auf Vorwahlstellung benötigt.

Vorteilhafterweise kann die schaltbare Halteeinrichtung 1 mit der zugehörigen Vorschaltwelle 2 bzw. 5 und den damit verbundenen beweglichen Abstützelementen 16 eine modulartige, vorzugsweise separat vormontierbare Baugruppe bilden, die an dem Messerträger 10 anmontierbar und vorteilhafterweise auch lösbar wieder abmontierbar sein kann.

## Patentansprüche

1. Schneidwerk für eine Erntemaschine wie Ladewagen und/oder Ballenpresse, mit einer Mehrzahl von Messern (3), die an einem Messerträger (10) gelagert und in Schneidstellung in einen Erntegutkanal (8) hineinragend gehalten sind, wobei der Messerträger (10) zwischen einer Aktivstellung und einer Inaktivstellung, in der die Messer (3) außerhalb des Erntegutkanals (8) angeordnet sind, beweglich gelagert ist, wobei zumindest eine Untergruppe der Messer (3) an dem Messerträger (10) beweglich gelagert und wahlweise in eine Vorwahlstellung oder eine Nichtvorwahlstellung, in der die Messergruppe auch bei in seiner Aktivstellung befindlichem Messerträger (10) außerhalb des Erntegutkanals (8) verbleiben, verbringbar ist, wobei zumindest eine schaltbare Halteeinrichtung (1), die bewegliche Abstützelemente (16) umfasst, zum Halten der Messeruntergruppe in den genannten Vorwahl- und Nichtvorwahlstellungen am Messerträger (10) vorgesehen ist, **dadurch gekennzeichnet, dass** für zumindest einen Teil der genannten Messeruntergruppe an dem Messerträger (10) zusätzlich zu den beweglichen Abstützelementen (16) der schaltbaren Halteeinrichtung (1) eine feste Abstützung (15) zum festen Halten des genannten Teils der Messeruntergruppe in der Vorwahlstellung an dem Messerträger (10) vorgesehen ist, so dass der genannte Teil der Messeruntergruppe wahlweise fest in der Vorwahlstellung oder beweglich zwischen Vorwahlstellung und Nichtvorwahlstellung am Messerträger (10) abstützbar ist.

2. Schneidwerk nach dem vorhergehenden Anspruch, wobei die Messer (3) jeweils unter Zwischenschaltung eines Sicherheitsauslösemechanismus (18), der bei Überlast nachgebende Rückhaltemittel (12) aufweist, an den festen oder beweglichen Abstützelementen (15, 16) abgestützt sind.

3. Schneidwerk nach einem der vorhergehenden Ansprüche, wobei die Messer (3) jeweils schwenkbar um eine Messerschwenkachse (33) gelagert sind und mittels einer Abstützstrebe (13) an dem Messerträger (10) abgestützt sind, wobei die genannte Abstützstrebe (13) einerseits gelenkig an dem jeweiligen Messer (3) angelenkt ist und andererseits gelenkig wahlweise an einem festen Abstützelement (15) oder einem beweglichen Abstützelement (16) anlenkbar ist.

4. Schneidwerk nach dem vorhergehenden Anspruch, wobei die Abstützstreben (13) längenveränderbar, insbesondere bei Überlast eine Längenveränderung zulassend ausgebildet sind.

5. Schneidwerk nach dem vorhergehenden Anspruch, wobei die Abstützstreben (13) als Federbein ausgebildet sind, das von einer Federeinrichtung (14) in eine vorbestimmte Ausgangsstellung vorgespannt ist.

6. Schneidwerk nach einem der vorhergehenden Ansprüche, wobei die zumindest eine schaltbare Halteeinrichtung (1) zumindest eine drehbare Vorschaltwelle (2) aufweist, an der die beweglichen Abstützelemente (16) angelenkt sind derart, dass ein Verdrehen der Vorschaltwelle (2) ein Verschwenken der beweglichen Abstützelemente (16) zwischen deren Vorwahl- und Nichtvorwahlstellung bewirkt.

7. Schneidwerk nach einem der vorhergehenden Ansprüche, wobei die zumindest eine schaltbare Halteeinrichtung (1) selbstverriegelnd ausgebildet ist und die beweglichen Abstützelemente (16) fremdenergiefrei ohne Betätigung eines Stellaktors in deren Vorwahlstellung hält.

8. Schneidwerk nach dem vorhergehenden Anspruch, wobei die beweglichen Abstützelemente (16) in ihrer Vorwahlstellung von einem Anschlag abgestützt sind, wobei die beweglichen Abstützelemente (16) auf ihrem Weg von der Nichtvorwahlstellung in die Vorwahlstellung über einen Totpunkt hinweg fahren und bei am Abschlag befindlichem Abstützelement (16) eine Kraftübertragungslinie zwischen Messer (3) und beweglichem Abstützelement (16) an einer Drehachse der beweglichen Abstützelemente (16) vorbei auf den Anschlag geht.

9. Schneidwerk nach einem der vorhergehenden Ansprüche, wobei die schaltbare Halteeinrichtung (1) zusammen mit den beweglichen Abstützelementen (16) eine modulartige, insbesondere separat vormontierte Baugruppe bildet, die an den Messerträger (10), vorzugsweise lösbar, anmontierbar ist.

## Claims

1. A cutting mechanism for a harvester such as a self-loading wagon and/or a baler, having a plurality of blades (3) that are supported at a blade carrier (10) and that are held projecting into a harvest passage (8) in a cutting position, wherein the blade carrier (10) is movably supported between an active position and an inactive position in which the blades (3) are arranged outside the harvest passage (8); wherein at least one sub-group of the blades (3) is movably supported at the blade carrier (10) and can selectively be brought into a preselection position or a non-preselection position in which the blade group also remains outside the harvest passage (8) with a blade carrier (10) in its active position; and wherein at least one switchable holding device (1) that comprises movable support elements (16) for holding the blade sub-group is provided in said preselection and non-preselection positions at the blade carrier (10),
**characterized in that**
a fixed support (15) for a fixed holding of at least some of the blade sub-group at the blade carrier (10) in the preselection position is provided for said some of said blade sub-group at the blade carrier (10) in addition to the movable support elements (16) of the switchable holding device (1) so that said some of the blade sub-group is selectively fixedly supportable in the preselection position or movably supportable between the preselection position and the non-preselection position at the blade carrier (10).

2. A cutting mechanism in accordance with the preceding claim, wherein the blades (3) are each supported at the fixed or movable support elements (15, 16) while interposing a safety triggering mechanism (18) that has retention means (12) that yield on overload.

3. A cutting mechanism in accordance with one of the preceding claims, wherein the blades (3) are each supported pivotably about a blade pivot axis (33) and are supported at the blade carrier (10) by means of a support bar (13); and wherein said support bar (13) is pivotably connected in an articulated manner to the respective blade (3), on the one hand, and is selectively pivotably connectable in an articulated manner to a fixed support element (15) or to a movable support element (16), on the other hand.

4. A cutting mechanism in accordance with the preceding claim, wherein the support bars (13) are length-variable, in particular permitting a length variation on overload.

5. A cutting mechanism in accordance with the preceding claim, wherein the support bars (13) are configured as a strut that is preloaded into a predefined starting position by a spring device (14).

6. A cutting mechanism in accordance with one of the preceding claims, wherein the at least one switchable holding device (1) has at least one rotatable pre-shaft (2) to which the movable support elements (16) are connected in an articulated manner such that a rotation of the pre-shaft (2) effects a pivoting of the movable support elements (16) between their preselection and non-preselection positions.

7. A cutting mechanism in accordance with one of the preceding claims, wherein the at least one switchable holding device (1) is configured as self-latching and holds the movable support elements (16) in their preselection position free of external energy without actuation of an adjustment actuator.

8. A cutting mechanism in accordance with the preceding claim, wherein the movable support elements (16) are supported by an abutment in their preselection position; and wherein the movable support elements (16) move over a dead center on their way from the non-preselection position into the preselection position and a force transmission line between the blade (3) and the movable support element (16) passes an axis of rotation of the movable support elements (16) onto the abutment with a support element (16) located at the abutment.

9. A cutting mechanism in accordance with one of the preceding claims, wherein the switchable holding device (1) together with the movable support elements (16) forms a modular assembly, in particular a separately premounted assembly that can be installed, preferably releasably, at the blade carrier (10).

## Revendications

1. Barre de coupe de moissonneuse telle qu'un véhicule de chargement et/ou une botteleuse, comprenant une pluralité de lames (3), qui sont montées sur un porte-lames (10) et, en position de coupe, maintenues dépassant dans un conduit de récolte (8), le porte-lames (10) étant monté mobile entre une position active et une position inactive, dans laquelle les lames (3) sont disposées hors du conduit de récolte (8), au moins un sous-groupe des lames (3) étant monté mobile sur le porte-lames (10) et pouvant être amené au choix dans une position de présélection ou une position de non-présélection, dans laquelle le groupe de lames reste hors du conduit de récolte (8) même lorsque le porte-lames (10) se trouve dans sa position active,
au moins un dispositif de maintien (1) commutable, qui comprend des éléments d'appui (16) mobiles, étant prévu sur le porte-lames (10) pour maintenir le sous-groupe de lames dans lesdites positions de présélection et de non-présélection,
**caractérisée en ce que**
pour au moins une partie dudit sous-groupe de lames sur le porte-lames (10), un appui fixe (15) est prévu, en plus des éléments d'appui (16) mobiles du dispositif de maintien (1) commutable, sur le porte-lames (10) pour le maintien fixe de ladite partie du sous-groupe de lames dans la position de présélection, de sorte que ladite partie du sous-groupe de lames peut être supportée sur le porte-lames (10) au choix fixement dans la position de présélection ou de manière mobile entre la position de présélection et la position de non-présélection.

2. Barre de coupe selon la revendication précédente, dans laquelle
les lames (3) sont supportées sur les éléments d'appui (15, 16) fixes ou mobiles respectivement par l'intermédiaire d'un mécanisme de déclenchement de sécurité (18), qui comporte des moyens de retenue (12) qui cèdent en cas de surcharge.

3. Barre de coupe selon l'une des revendications précédentes, dans laquelle
les lames (3) sont montées respectivement pivotantes sur un axe de pivotement de lame (33) et supportées sur le porte-lames (10) au moyen d'une barre d'appui (13),
ladite barre d'appui (13) étant d'un côté articulée de manière flexible sur la lame (3) respective et pouvant être de l'autre côté articulée de manière flexible au choix sur un élément d'appui (15) fixe ou un élément d'appui (16) mobile.

4. Barre de coupe selon la revendication précédente, dans laquelle
les barres d'appui (13) sont réalisées de longueur modifiable, en particulier de manière autorisant une modification de longueur en cas de surcharge.

5. Barre de coupe selon la revendication précédente, dans laquelle
les barres d'appui (13) sont réalisées sous la forme d'une jambe de force à ressort, qui est précontrainte dans une position initiale prédéfinie par un dispositif de ressort (14).

6. Barre de coupe selon l'une des revendications précédentes, dans laquelle l'au moins un dispositif de maintien (1) commutable comporte au moins un arbre de précommutation (2) rotatif, sur lequel les éléments d'appui (16) mobiles sont articulés de telle manière qu'une rotation de l'arbre de précommutation (2) entraîne un pivotement des éléments d'appui (16) mobiles entre leur position de présélection et leur position de non-présélection.

7. Barre de coupe selon l'une des revendications précédentes, dans laquelle l'au moins un dispositif de maintien (1) commutable est réalisé à autoverrouillage et maintient les éléments d'appui (16) mobiles dans leur position de présélection sans apport d'énergie extérieure sans actionnement d'un actionneur de réglage.

8. Barre de coupe selon la revendication précédente, dans laquelle
les éléments d'appui (16) mobiles sont supportés dans leur position de présélection par une butée,
les éléments d'appui (16) mobiles passant, sur leur trajet de la position de non-présélection à la position de présélection, au-delà d'un point mort et, lorsque l'élément d'appui (16) se trouve sur la butée, une ligne de transmission de force entre les lames (3) et l'élément d'appui (16) mobile va vers la butée en passant à côté d'un axe de rotation des éléments d'appui (16) mobiles.

9. Barre de coupe selon l'une des revendications précédentes, dans laquelle
le dispositif de maintien (1) commutable forme, conjointement avec les éléments d'appui (16) mobiles, un ensemble modulaire, en particulier prémonté séparément, qui peut être monté sur le porte-lames (10), de préférence de manière amovible.
